# EUROPEAN PATENT SPECIFICATION

(11) **EP 0 879 958 B1**
(45) Date of publication and mention of the grant of the patent: **24.09.2003**
(21) Application number: 97303511.6
(22) Date of filing: 22.05.1997
(51) Int. Cl.: F03B 17/00

(54) **Prime mover driven by gravitational force**
Gravitationskräfteantriebsmaschine
Machine motrice gravitationnel

(43) Date of publication of application: 25.11.1998
(73) Proprietor: Liou, David, Hsintien, Taipei Hsien (TW)
(72) Inventor: Liou, David, Hsintien, Taipei Hsien (TW)
(74) Representative: Johnstone, Helen Margaret

(56) References cited:
- DE-A- 4 431 369
- FR-A- 591 143
- FR-A- 741 183
- FR-A- 2 407 368
- ORD-HUME A: "PERPETUAL MOTION" 1994 , PERPETUAL MOTION, HISTORY OF AN OBSESSION, PAGE(S) 60/61 , ORD-HUME A XP002014025 * Chapter 3,"Medieval perpetual motion" ,in its entirety *

## Description

The present invention is related to a system for generating electricity, and more particularly to a system for generating electricity by gravity.

Some conventional methods such as those based on hydropower, firepower, and nuclear power are generally adopted to generate electricity worldwide. The method based on hydropower, however, is not proper in Taiwan because of the lack of rapid flow rivers, and it is impossible to generate electricity to meet total demand by this method. The firepower is the most used method in Taiwan. It must spend five years and NT$ 20,000,000,000 for constructing a firepower station to generate electricity of 500,000 kilowatts. The investment usually can not be returned in twenty years. Besides, combustion of oil or coal will cause environmental pollution which is noted today. The nuclear power method can be used to generate considerable energy, but the nuclear waste is hard to treat. It also needs a large amount of water to supply the reactors and to cool the whole system. With respect to the safety and cost, the present invention is developed for generating electricity in more economical and convenient way.

An objective of the present invention is to provide a system substituted for the hydropower system for generating electricity more speedily and economically.

Another objective of the present invention is to provide a system for generating considerable electricity.

A further objective of the present invention is to provide a system for generating electricity without polluting environment.

FR 741 183 discloses a system for generating electricity by gravity comprising a working medium to be descended for a higher place by gravity; a working shaft to be rotated around an axis by said working medium; and a generator driven by said working shaft for generating said electricity.

FR 591, 143 also discloses a system for generating electricity comprising a working medium to be descended from a higher place by gravity and an electricity generator driven by a working shaft rotated around an axis by said working medium.

In accordance with the present invention, a system for generating electricity by gravity is characterised as set out in the appended claims.

The present invention may best be understood through the following description with reference to the accompanying drawings, in which:
Figure 1 is a perspective diagram showing an upper part of a preferred embodiment for generating electricity by gravity according to the present invention;
Figure 2 is a side view diagram showing a momentum stabilising device according to the present invention;
Figure 3 is a detail drawing showing part of a circulating device according to the present invention;
Figure 4 is a perspective diagram showing part of a circulating device and a second tank according to the present invention;
Figure 5 is a bottom view diagram showing a second tank according to the present invention;
Figure 6 is a perspective diagram showing a whole circulating device according to the present invention;
Figure 7 is a perspective diagram showing an upper tank and a lower part of this preferred embodiment according to the present invention.

The present invention will now be described more specifically with reference to the following embodiments. It is to be noted that the following descriptions of preferred embodiments of this invention are presented herein for the purpose of illustration and description only; it is not indented to be exhaustive or to be limited to the precise form disclosed.

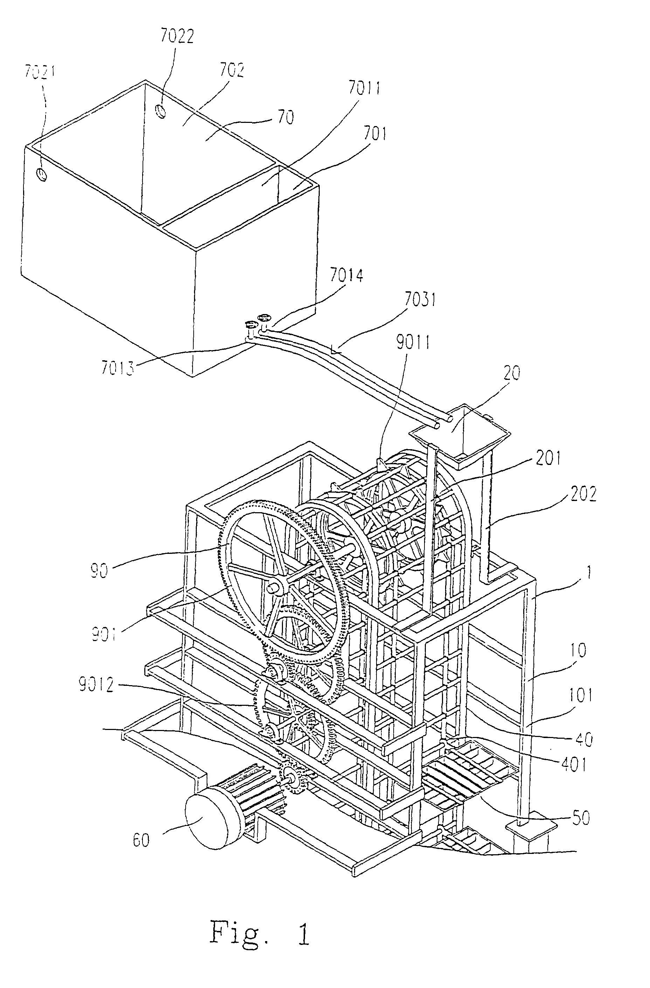

Please refer to Figure 1. Figure 1 is a perspective diagram showing an upper part of a preferred embodiment for generating electricity by gravity according to the present invention. A gravity generating system 1 includes a system body 10, a first tank 20, a circulating device 40, a plurality of second tanks 50, a generator 60, and an upper tank 70. The system body 10 is the framework of the system 1. The working medium was stored in the first tank 20 before the operation of the system 1, then the working medium flows downwardly into the second tanks 50 which are substantially vertically spacedly mounted on circulating device 40 and move vertically due to the impulse of receiving the working medium. The circulating device 40 circulates around the system body 10 ceaselessly corresponding to the moving of the second tanks 50 and drives the working shaft 601 to rotate. The generator 60 generates electricity by transforming kinetic energy. The falling working medium is pumped to the upper tank 70 as the source of another cycle. The theory of this system 1 is to transform potential energy to electrical energy.

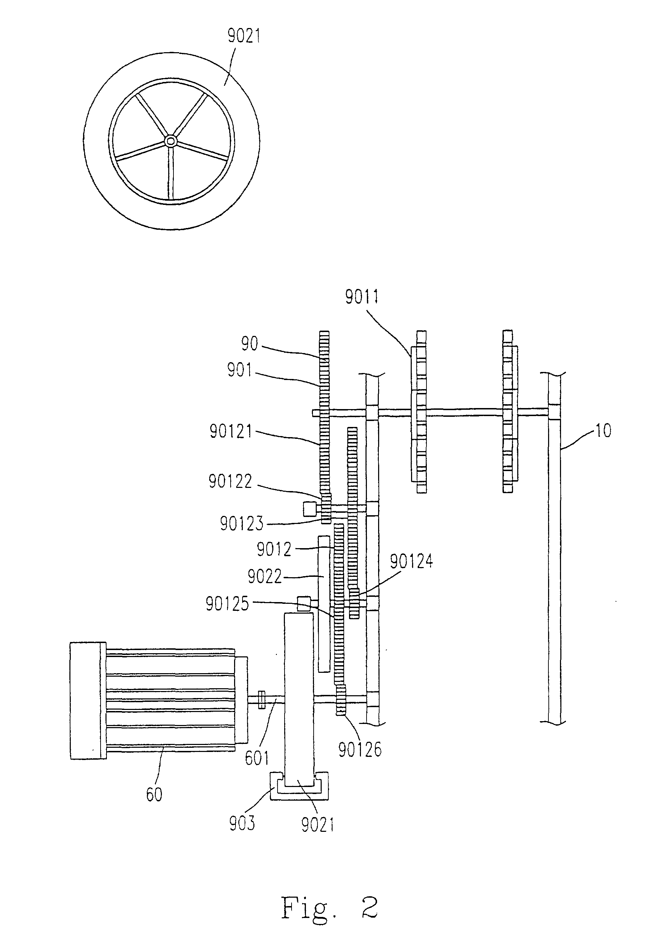

Please refer to figure 2. Figure 2 is a side view diagram showing a momentum stabilising device according to the present invention. The momentum stabilising device 90 mounted on the system body 10 is driven to rotate by the circulating device 40 for stabilising the momentum inertia of the working shaft 601. The equipment includes a fly wheel 9021 and a transmission mechanism 901 mounted between the working shaft 601 and the circulating device 40 for increasing speed of the working shaft 601. The transmission mechanism 901 further includes a rotating wheel 9011 connected with the circulating device 40, and a speed-increasing device 9012 for increasing the rotation speed of the working shaft 601. The speed-increasing device 9012 includes a first gear 90121, a second gear 90122, a third gear 90123, a fourth gear 90124, a fifth gear 90125, and a sixth gear 90126. The first gear 90121 is coaxially mounted with the rotating wheel 9011, and the second gear 90122 which is engaged with the first gear 90121 is driven to rotate by the first gear 90121 is driven to rotate by the first gear 90121 in a faster speed than the first gear 90121. Similarly, the third gear 90123 is coaxially mounted with the second gear 90122, and the fourth gear 90124 which is engaged with the third gear 90123 is driven to rotate by the third gear 90123 in a faster speed than the third gear 90123. As stated above, the fifth gear 90125 is coaxially mounted with the fourth gear 90124, and the sixth gear 90126 which is engaged with the fifth gear 90125 is driven to rotate by the fifth gear 90125 in a faster speed than the fifth gear 90125. The sixth gear 90126 is mounted coaxially and fixed to the fly wheel 9021 and the generator 60, and the fifth gear 90125 is mounted coaxially with the second fly wheel 9022. The braking device 903 is used for stopping the rotation of the fly wheel 9021 before starting operation till the whole system 1 is on ready.

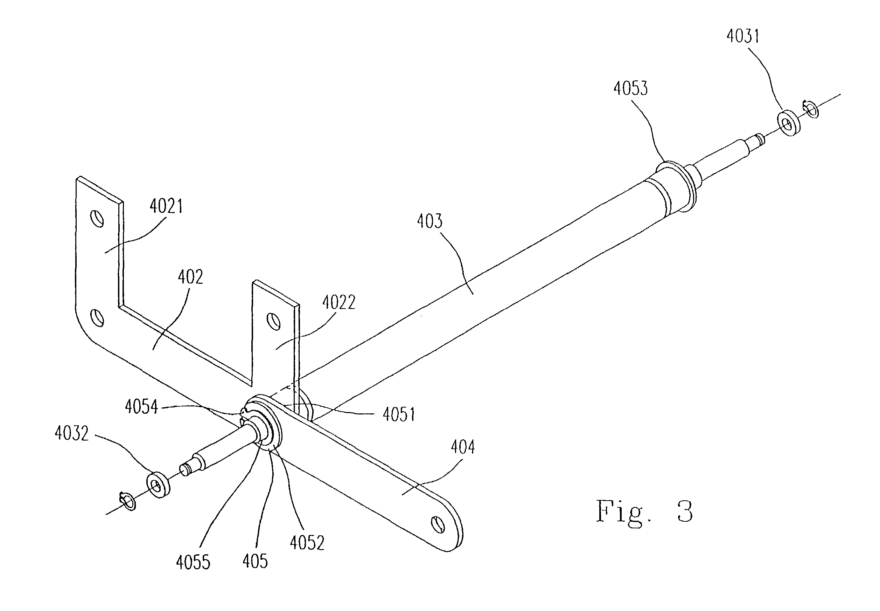

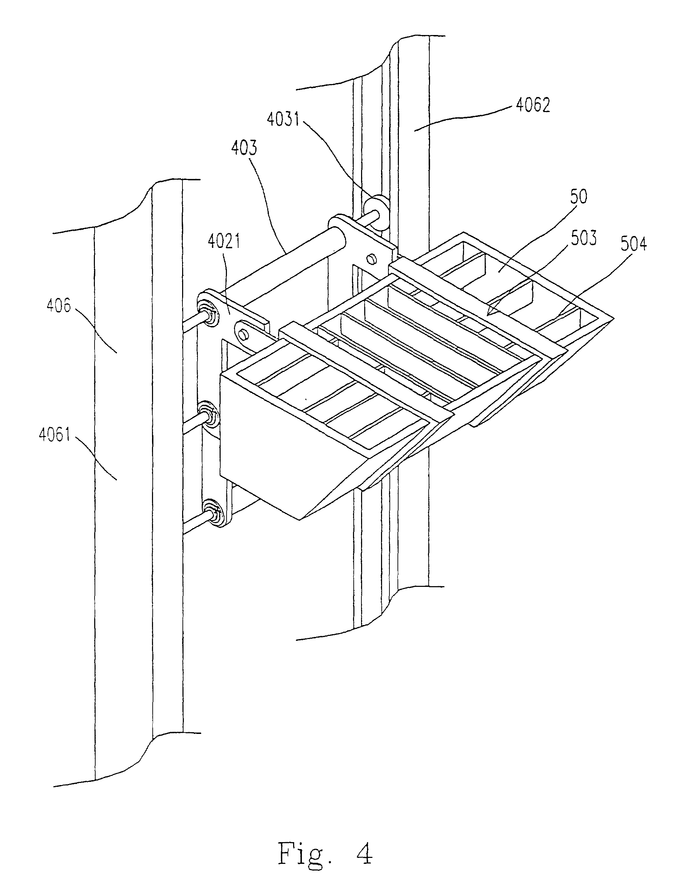

Please refer to Figures 3 and 4 showing the circulating device according to the present invention. Part of the circulating device 40 includes a ladder shaft 401, a fixing piece 402, a moving shaft 403, a connecting piece 404, a locking device 405, and a guiding device 406. The second tank 50 is connected with the ladder shaft 401 by the fixing piece 402 having two arms 4021 with equal length which support the weight of the second tank 50. The connecting piece 404 is used for transferring the momentum of the moving shaft 403 which is used for transferring the momentum of the fixing piece 402. The locking device 405 for preventing breakaway of the fixing piece 402 and the connecting piece 404 includes a pair of rings 4052 and 4053, a C-type ring 4054, and a trough 4055. The ring 4052 and the C-type ring 4054 can limit the moving of the fixing piece 402 and the connecting piece 404 in the region 4051. The guiding device 406 for guiding the ladder shafts 401 to circulate along the system body 10 includes two circulating flutes 4061 and 4062 as the moving paths of pulleys 4031 and 4032 connected with the ladder shaft 401.

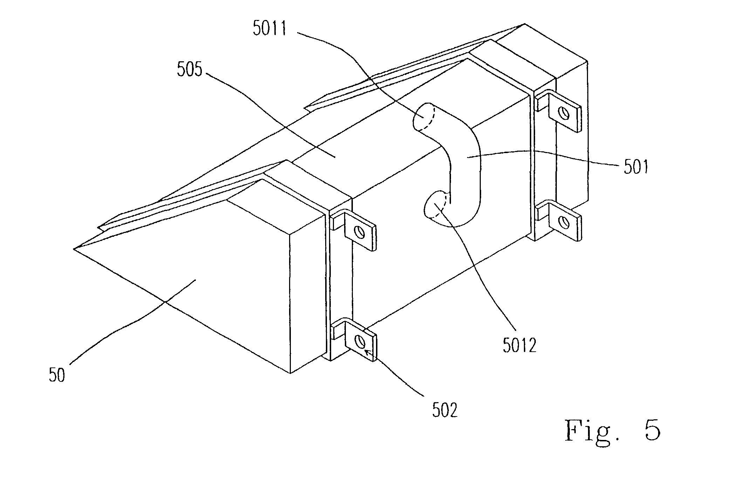

Please refer to Figure 4 and Figure 5 showing the structure of one second tank according to the present invention. The second tank 50 includes a duct 501, four fixing slices 502, an anti-tension strip 503, and a buffering baffle 504. The duck 501 which is used for guiding the working medium to downwardly flow to an adjacent second tank 50 below each second tank 50 has a side inlet 5012 and a bottom outlet 5011 under the bottom 505 of the second tank 50. The fixing slices 502 are used for fixing the second tank 50 on the circulating device 40. The anti-tension strip 503 mounted around the second tank 50 is used for preventing deformation of the second tank 50. The buffering baffle 504 mounted over the second tank 50 is used for optimally collecting the working medium without splashing.

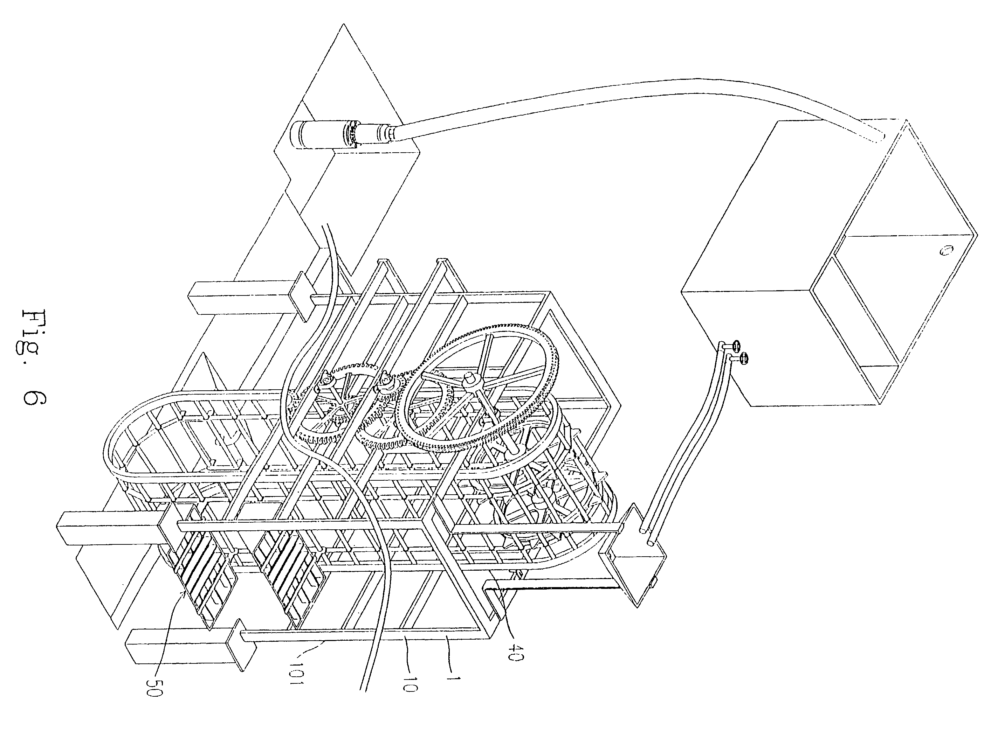

Figure 6 is a perspective diagram showing a whole circulating device according to the present invention. The system body 10 is a truss 101. The system body 10, the circulating device 40, and the second tanks 50 constitute main part of this system 1 for generating electricity by gravity.

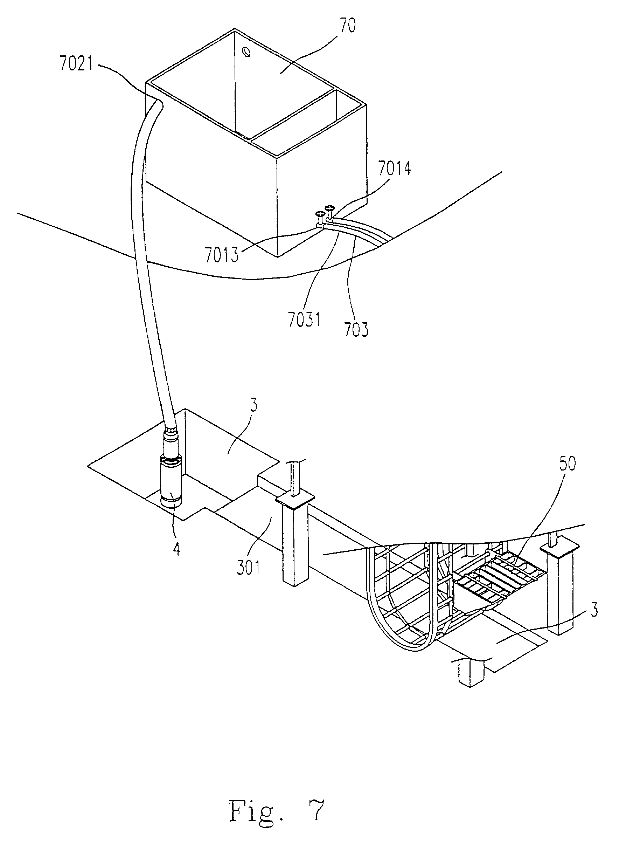

Figure 7 is a perspective diagram showing an upper tank and a lower part of this preferred embodiment according to the present invention. The upper tank 70 for supplying the working medium to the first tank 20 includes a stabilising tank 701 for stabilising the working medium, and an inlet tank 702 for receiving the working medium pumped from the lower tank 3 by the pumping device 4. As indicated in Figure 1, the stabilising tank 701 includes a vertical wall 7011 for stabilising the working medium, a first inlet for the working medium flowing from the inlet tank 702 into the stabilising tank 701, a basic outlet 7013 and an adjustable outlet 7014 for supplying fixed and adjustable amount of the working medium to the first tank 20 via ducts 7031. The inlet tank 702 has a second inlet 7021 for the working medium flowing in and an overflow outlet 7022 for overflowing the excess working medium. The lower tank 3 is used for collecting the working medium splashing from the second tanks 50 by a canal structure 301.

Thus, the principle of the present invention includes a working medium to be descended from a higher place by gravity, a working shaft 601 to be rotated around an axis by the working medium, and a generator 60 driven by the working shaft 601 for generating electricity.

Compared to a conventional method based on firepower for supplying 500,000 kilowatts, it spends no more than one year and less than NT$ 100,000,000 to construct a power station according to the present invention. Besides, no pollution is produced and no other power is needed to start this system. It is indicated that a 30 meters height circulating device with a 3 horsepower pumping device providing 60 gallons water in a minute, ten second tanks which vertically moved with a speed of 30 meters in a minute, and 2,000 kilograms of circulating water can generate electricity of 12 kilowatts. Another example is that a 30 meters height circulating device with a 3 horsepower pumping device providing 600 gallows water in a minute, and ten second tanks which vertically moved with a speed of 20 meters in a minute can generate electricity of 500 kilowatts. The quantity of generating electricity may be adjusted by changing scale of the system, height of the circulating device, and amount of the circulating water, etc. Easy operating and maintenance is also a remarkable advantage of the system.

## Claims

1. A system for generating an electricity by gravity including a working medium to be descended from a higher place by gravity, and an electricity generator driven by a working shaft around an axis by said working medium,
a system body (10) supporting thereon a working shaft (601), a first tank (20) disposed upon said system body (10) for collecting therein said working medium, a plurality of second tanks (50) substantially vertically spacedly mounted on said system body (10) for sequentially receiving said working medium from said first tank (20) for driving said working shaft (601) to rotate by gravity by means of containing therein said working medium, and a generator (60) driven by said working shaft (601) for generating said electricity, **characterised in that** said second tanks (5) includes:
a duct (501) for guiding said working medium to downwardly flow to a following second tank (50);
a buffering baffle (504) for optimally collecting therein said working medium downwardly flowing from a previous second tank (50); and
a side inlet (5012) and a bottom outlet (5011) communicating therebetween said duct (501).

2. A system as set forth in claim 1, **characterised in that** said system further includes:
a circulating device (40) circulatably mounted on said system body (10) for circulating therealong;
a momentum stabilising device (90) for stabilising a momentum inertia of said working shaft (601);
an upper tank (70) for supplying said working medium to said first tank (20);
a lower tank (3) for collecting therein said working medium obtained from said second tanks (50); and
a pumping device (4) for pumping said working medium from said lower tank (3) to said upper tank (70).

3. A system as set forth in claim 1, **characterised in that** a first one of said second tanks (50) first receives said working medium from said first tank (20) and the other said second tanks (50) consecutively receives said working medium from said first one of said second tanks (50) in order that said working shaft (601) is continuously driven to rotate.

4. A system as set forth in claim 3, **characterised in that** said working medium is a liquid.

5. A system as set forth in claim 2, **characterised in that** said circulating device (40) includes:
a plurality of parallelly spaced ladder shafts (401) circulatably mounted on said system body (10);
a plurality of connecting pieces (404) respectively connecting together said ladder shafts (401);
a plurality of fixing pieces (402) respectively fixed to said ladder shafts (401) for respectively fixing thereto said second tanks (50); and
a guiding device (406) secured to said system body (10) for guiding said ladder shafts (401) to circulate along said system body (10).

6. A system as set forth in claim 1, **characterised in that** said momentum stabilising device (90) is a fly wheel (9021).

7. A system as set forth in claim 1, **characterised in that** said system further includes a transmission mechanism (901) mounted between said working shaft (601) and said circulating device (40) for increasing a speed of said working shaft (601), said transmission mechanism (901) including:
a first gear (90121) mounted on said system body (10) and driven to rotate by said circulating device (40);
a second gear (90122) driven to rotate by said first gear (90121) in a faster speed than that of said first gear (90121);
a third gear (90123) coaxially mounted with said second gear (90122) on said system body (10);
a fourth gear (90124) driven to rotate by said third gear (90123) in a faster speed than that of said third gear (90123);
a fifth gear (90125) coaxially mounted with said fourth gear (90124) on said system body (10); and
a sixth gear (90126) coaxially fixed to said working shaft (601) and driven to rotate by said fifth gear (90125) in a faster speed than that of said fifth gear (90125).

8. A system as set forth in claim 7, **characterized in that** said system further includes a braking device (903) mounted between said system body (10) and said working shaft (601).

9. A system as set forth in claim 1, **characterised in that** said upper tank (70) includes a stabilising tank (701) for stabilising said liquid contained therein, said stabilising tank (701) including:
a basic outlet (7013) for supplying therefrom a fixed amount of said working medium to said first tank (20);
an adjustable outlet (7014) for supplying therefrom an adjustable amount of said working medium to said first tank (20); and
an overflow outlet (7022) for overflowing therefrom said working medium contained therein.

## Patentansprüche

1. Anlage zum Erzeugen von Elektrizität durch Schwerkraft mit einem von einer höheren Stelle durch Schwerkraft herabzubewegenden Arbeitsmedium und einem Stromerzeuger, der von dem genannten Arbeitsmedium über eine Arbeitswelle um eine Achse angetrieben wird,
einem Anlagenkörper (10), der eine Arbeitswelle (601), einen auf dem genannten Anlagenkörper (10) angeordneten ersten Behälter (20) zum Sammeln des genannten Arbeitsmediums in ihm, eine Mehrzahl von zweiten Behältern (50), die im Wesentlichen vertikal beabstandet an dem genannten Anlagenkörper (10) montiert sind, um aufeinander folgend das genannte Arbeitsmedium aus dem genannten ersten Behälter (20) durch Schwerkraft aufzunehmen zum Antreiben der genannten Arbeitswelle (601) zum Drehen dadurch, dass das genannte Arbeitsmedium darin gefasst wird, und einem von der genannten Arbeitswelle (601) angetriebenen Generator (60) zum Erzeugen der genannten Elektrizität trägt, **dadurch gekennzeichnet, dass** die genannten zweiten Behälter (5) Folgendes haben:
einen Kanal (501) zum Leiten des genannten Arbeitsmediums zum Abwärtsfließen zu einem folgenden zweiten Behälter (50),
eine Pufferablenkplatte (504) zum optimalen Sammeln des genannten, aus einem vorhergehenden zweiten Behälter (50) abwärtsfließenden Arbeitsmediums darin, und
einen seitlichen Einlass (5012) und einen unteren Auslass (5011), die zwischen sich den genannten Kanal (501) verbinden.

2. Anlage nach Anspruch 1, **dadurch gekennzeichnet, dass** die genannte Anlage ferner Folgendes aufweist:
eine umlaufende Vorrichtung (40), die umlauffähig an dem genannten Anlagenkörper (10) montiert ist zum Umlaufen an ihm entlang;
eine Bewegungsenergie stabilisierende Vorrichtung (90) zum Stabilisieren einer Impulsträgheit der genannten Arbeitswelle (601);
einen oberen Behälter (70) zum Zuführen des genannten Arbeitsmediums zu dem genannten ersten Behälter (20);
einen unteren Behälter (3) zum Sammeln des aus den genannten zweiten Behältern (50) erhaltenen genannten Arbeitsmediums in ihm und
eine Pumpvorrichtung (4) zum Pumpen des genannten Arbeitsmediums aus dem genannten unteren Behälter (3) zu dem genannten oberen Behälter (70).

3. Anlage nach Anspruch 1, **dadurch gekennzeichnet, dass** ein erster der genannten zweiten Behälter (50) zunächst das genannte Arbeitsmedium aus dem genannten ersten Behälter (20) erhält und der andere der genannten zweiten Behälter (50) nachfolgend das genannte Arbeitsmedium aus dem genannten ersten der genannten zweiten Behälter (50) erhält, damit die genannte Arbeitswelle (601) kontinuierlich zum Drehen angetrieben wird.

4. Anlage nach Anspruch 3, **dadurch gekennzeichnet, dass** das genannte Arbeitsmedium eine Flüssigkeit ist.

5. Anlage nach Anspruch 2, **dadurch gekennzeichnet, dass** die genannte umlaufende Vorrichtung (40) Folgendes hat:
eine Mehrzahl parallel beabstandeter Leiterelemente (401), die umlauffähig an dem genannten Anlagenkörper (10) montiert sind,
eine Mehrzahl von Verbindungsstücken (404), die die genannten Leiterelemente (401) beziehungsweise miteinander verbinden,
eine Mehrzahl von Befestigungsstücken (402), die beziehungsweise an den genannten Leiterelemente (401) befestigt sind zum beziehungsweisen Befestigen der genannten zweiten Behälter (50) daran, und
eine an dem genannten Anlagenkörper (10) befestigte Führungsvorrichtung (406) zum Führen der genannten Leiterelemente (401) zum Umlaufen an dem genannten Anlagenkörper (10) entlang.

6. Anlage nach Anspruch 1, **dadurch gekennzeichnet, dass** die genannte Bewegungsenergie stabilisierende Vorrichtung (90) ein Schwungrad (9021) ist.

7. Anlage nach Anspruch 1, **dadurch gekennzeichnet, dass** die genannte Anlage ferner eine zwischen der genannten Arbeitswelle (601) und der genannten umlaufenden Vorrichtung (40) montierte Kraftübertragungsvorrichtung (901) zum Steigern einer Geschwindigkeit der genannten Arbeitswelle (601) hat, wobei die genannte Kraftübertragungsvorrichtung (901) Folgendes hat:
ein erstes Getriebe (90121), das an dem genannten Anlagenkörper (10) montiert ist und von der genannten umlaufenden Vorrichtung (40) zum Drehen angetrieben wird,
ein zweites Getriebe (90122), das von dem genannten ersten Getriebe (90121) zum Drehen mit einer schnelleren Geschwindigkeit als der des genannten ersten Getriebes (90121) angetrieben wird,
ein drittes Getriebe (90123), das mit dem genannten zweiten Getriebe (90122) koaxial an dem genannten Anlagenkörper (10) montiert ist,
ein viertes Getriebe (90124), das von dem genannten dritten Getriebe (90123) zum Drehen mit einer schnelleren Geschwindigkeit als der des genannten dritten Getriebes (90123) angetrieben wird,
ein fünftes Getriebe (90125), das mit dem genannten vierten Getriebe (90124) koaxial an dem genannten Anlagenkörper (10) montiert ist, und
ein sechstes Getriebe (90126), das koaxial an der genannten Arbeitswelle (601) fixiert ist und von dem genannten fünften Getriebe (90125) zum Drehen mit einer schnelleren Geschwindigkeit als der des genannten fünften Getriebes (90125) angetrieben wird.

8. Anlage nach Anspruch 7, **dadurch gekennzeichnet, dass** die genannte Anlage ferner eine Bremsvorrichtung (903) hat, die zwischen dem genannten Anlagenkörper (10) und der genannten Arbeitswelle (601) montiert ist.

9. Anlage nach Anspruch 1, **dadurch gekennzeichnet, dass** der genannte obere Behälter (70) einen Stabilisierungsbehälter (701) zum Stabilisieren der darin enthaltenen genannten Flüssigkeit hat, wobei der genannte Stabilisierungsbehälter (701) Folgendes hat:
einen Hauptauslass (7013) zum Zuführen einer festen Menge des genannten Arbeitsmediums zu dem genannten ersten Behälter (20) aus ihm,
einen einstellbaren Auslass (7014) zum Zuführen einer verstellbaren Menge des genannten Arbeitsmediums zu dem genannten ersten Behälter (20) aus ihm und
einen Überlaufauslass (7022) zum Überfließen des in ihm enthaltenem genanntem Arbeitsmedium aus ihm.

## Revendications

1. Système de production d'électricité par gravité y compris un fluide moteur devant être descendu d'un lieu supérieur par gravité, et un générateur électrique entraîné par un arbre moteur autour d'un axe par ledit fluide moteur,
un corps du système (10) y supportant un arbre moteur (601), un réservoir primaire (20) disposé sur ledit corps du système (10) pour y recueillir ledit fluide moteur, une pluralité de réservoirs secondaires (50) montés dans une large mesure de manière espacée à la verticale sur ledit corps du système (10) pour recevoir de manière séquentielle ledit fluide moteur en provenance dudit réservoir primaire (20) pour entraîner ledit arbre moteur (601) en une rotation par gravité par des moyens y contenant ledit fluide moteur, et un générateur (60) entraîné par ledit arbre moteur (601) pour produire ladite électricité, **caractérisé en ce que** lesdits réservoirs secondaires (5) comportent :
un conduit (501) destiné à guider ledit fluide moteur en un écoulement descendant jusque dans un réservoir secondaire suivant (50) ;
une chicane tampon (504) destinée à y recueillir de manière optimale ledit fluide moteur qui s'écoule de manière descendante en provenance d'un réservoir secondaire précédent (50); et
une entrée latérale (5012) et une sortie de fond (5011) communicant avec entre elles ledit conduit (501).

2. Système selon la revendication 1, **caractérisé en ce que** ledit système comporte par ailleurs :
un dispositif de circulation (40) monté de manière circulante sur ledit corps du système (10) pour y circuler sur toute la longueur ;
un dispositif stabilisateur de la quantité de mouvement (90) destiné à stabiliser une inertie de quantité de mouvement dudit arbre moteur (601) ;
un réservoir supérieur (70) destiné à fournir ledit fluide moteur audit réservoir primaire (20) ;
un réservoir inférieur (3) destiné à y recueillir ledit fluide moteur obtenu desdits réservoirs secondaires (50) ; et
un dispositif de pompage (4) destiné à pomper ledit fluide moteur dudit réservoir inférieur (3) dans ledit réservoir supérieur (70).

3. Système selon la revendication 1, **caractérisé en ce qu'**un premier desdits réservoirs secondaires (50) reçoit en premier ledit fluide moteur en provenance dudit réservoir primaire (20) et **en ce que** les autres dits réservoirs secondaires (50) reçoivent de manière consécutive ledit fluide moteur en provenance dudit premier desdits réservoirs secondaires (50) afin que ledit arbre moteur (601) soit entraîné de manière continue en une rotation.

4. Système selon la revendication 3, **caractérisé en ce que** ledit fluide moteur est un liquide.

5. Système selon la revendication 2, **caractérisé en ce que** ledit dispositif de circulation (40) comporte :
une pluralité d'arbres à échelle espacés de manière parallèle (401) montés de manière circulante sur ledit corps du système (10) ;
une pluralité de pièces de raccord (404) raccordant ensemble de manière respective lesdits arbres à échelle (401) ;
une pluralité de pièces de fixation (402) fixées de manière respective auxdits arbres à échelle (401) pour y fixer de manière respective lesdits réservoirs secondaires (50) ; et
un dispositif de guidage (406) attaché audit corps du système (10) pour guider lesdits arbres à échelle (401) pour circuler le long dudit corps du système (10).

6. Système selon la revendication 1, **caractérisé en ce que** le dispositif stabilisateur de la quantité de mouvement (90) est un volant d'inertie (9021).

7. Système selon la revendication 1, **caractérisé en ce que** ledit système comporte par ailleurs un mécanisme de transmission (901) monté entre ledit arbre moteur (601) et ledit dispositif de circulation (40) pour une augmentation de vitesse dudit arbre moteur (601), ledit mécanisme de transmission (901) comportant
un premier engrenage (90121) monté sur ledit corps du système (10) et entraîné en une rotation par ledit dispositif de circulation (40) ;
un deuxième engrenage (90122) entraîné en une rotation par ledit premier engrenage (90121) à une vitesse supérieure à celle dudit premier engrenage (90121) ;
un troisième engrenage (90123) monté de manière coaxiale par rapport audit deuxième engrenage (90122) sur ledit corps du système (10) ;
un quatrième engrenage (90124) entraîné en une rotation par ledit troisième engrenage (90123) à une vitesse supérieure à celle dudit troisième engrenage (90123) ;
un cinquième engrenage (90125) monté de manière coaxiale par rapport audit quatrième engrenage (90124) sur ledit corps du système (10); et
un sixième engrenage (90126) fixé de manière coaxiale par rapport audit arbre moteur (601) et entraîné en une rotation par ledit cinquième engrenage (90125) à une vitesse supérieure à celle dudit cinquième engrenage (90125).

8. Système selon la revendication 7, **caractérisé en ce que** ledit système comporte par ailleurs un dispositif de freinage (903) monté entre ledit corps du système (10) et ledit arbre moteur (601).

9. Système selon la revendication 1, **caractérisé en ce que** ledit réservoir supérieur (70) comporte un réservoir stabilisateur (701) destiné à stabiliser ledit liquide y étant contenu, ledit réservoir stabilisateur (701) comportant
une sortie de base (7013) destinée à fournir en sa provenance un volume fixe dudit fluide moteur vers ledit réservoir primaire (20) ;
une sortie réglable (7014) destinée à fournir en sa provenance une volume réglable dudit fluide moteur vers ledit réservoir primaire (20) ; et
une sortie de déversement (7022) destinée à déverser en sa provenance ledit fluide moteur y étant contenu.
